# EUROPÄISCHE PATENTSCHRIFT

(11) **EP 2 826 044 B1**
(45) Veröffentlichungstag und Bekanntmachung des Hinweises auf die Patenterteilung: **13.04.2022**
(21) Anmeldenummer: 13725565.9
(22) Anmeldetag: 12.03.2013
(51) Int. Cl.: H01C 7/12

(54) **ÜBERSPANNUNGSSCHUTZGERÄT**
SURGE PROTECTION DEVICE
APPAREIL DE PROTECTION CONTRE LES SURTENSIONS

(30) Priorität: 12.03.2012 DE 102012004678
(43) Veröffentlichungstag der Anmeldung: 21.01.2015
(73) Patentinhaber: Phoenix Contact GmbH & Co. KG, 32825 Blomberg (DE)
(72) Erfinder: DEPPING, Christian, 32657 Lemgo (DE)
(74) Vertreter: Gesthuysen Patentanwälte
(86) Internationale Anmeldenummer: PCT/EP2013/000720
(87) Internationale Veröffentlichungsnummer: WO 2013/135369

(56) Entgegenhaltungen:
- EP-A1- 0 117 582
- EP-A2- 1 117 107
- WO-A2-2011/141115
- WO-A2-2012/027255

## Beschreibung

Die Erfindung betrifft ein Überspannungsschutzgerät mit einem Gehäuse, mit zwei Anschlüssen zum elektrischen Anschluss des Überspannungsschutzgeräts an den zu schützenden Strompfad und mit mindestens einem im Inneren des Gehäuses angeordneten ersten Ableiter, der als Varistor ausgebildet ist, wobei im Normalzustand des Überspannungsschutzgeräts der erste Anschluss elektrisch leitend mit dem ersten Anschlussbereich des Varistors und der zweite Anschluss über mindestens ein Bauteil mit dem zweiten Anschlussbereich des Varistors verbunden ist.

Elektrische Stromkreise und Anlagen arbeiten mit der für sie spezifizierten Spannung, der Nennspannung, normalerweise störungsfrei. Das gilt dann nicht, wenn Überspannungen auftreten. Als Überspannungen gelten alle Spannungen, die oberhalb der oberen Toleranzgrenze der Nennspannung liegen. Hierzu zählen vor allem auch die transienten Überspannungen, die aufgrund von atmosphärischen Entladungen, aber auch durch Schalthandlungen oder Kurzschlüsse in Energieversorgungsnetzen auftreten können und galvanisch, induktiv oder kapazitiv in elektrische Stromkreise eingekoppelt werden können. Um nun elektrische oder elektronische Stromkreise, wo auch immer sie eingesetzt sind, gegen transiente Überspannungen zu schützen, sind Überspannungsschutzgeräte entwickelt worden und seit Jahrzehnten bekannt.

Aufgrund von Alterung und zeitweise auftretenden Überspannungen (TOV) im Sekundenbereich kommt es insbesondere bei Überspannungsschutzgeräten mit einem Varistor als Ableiter zu einer unerwünschten Erhöhung des Leckstromes des Varistors bei Betriebsspannungen. Überspannungsschutzgeräte mit einem Varistor als Ableiter weisen daher heutzutage häufig eine thermische Abtrennvorrichtung auf, durch die ein nicht mehr einwandfrei funktionsfähiger Varistor elektrisch von dem zu überwachenden Strompfad abgetrennt wird. Bei bekannten Überspannungsschutzgeräten erfolgt die Überwachung des Zustandes des Varistors nach dem Prinzip eines Temperaturschalters, wobei bei Überhitzung des Varistors - beispielsweise aufgrund aufgetretener Leckströme - eine zwischen dem Varistor und einem Trennmittel vorgesehene Lötverbindung aufgetrennt wird, was zu einem elektrischen Abtrennen des Varistors führt.

Ein derartiges Überspannungsschutzgeräte ist beispielsweise aus der DE 695 03 743 T2 bekannt. Bei dem bekannten Überspannungsschutzgeräte, das zwei parallel zueinander angeordnete Varistoren aufweist, ist die thermische Abtrennvorrichtung zusätzlich noch mit einer optischen Zustandsanzeige verbunden, so dass der Zustand des Überspannungsschutzelements direkt vor Ort anhand der optischen Zustandsanzeige abgelesen werden kann. Als optische Zustandsanzeige weist dieses Überspannungsschutzgeräte einen im Gehäuse angeordneten ersten Schieber auf, der von Trennzungen betätigt wird, die die Trennmittel bilden, und dabei mit einem zweiten Schieber zusammenwirkt, der in Abhängigkeit von der Position des ersten Schiebers relativ zu einem Sichtfenster verschiebbar ist.

Aus der DE 601 12 410 T2 ist ein Überspannungsschutzgerät bekannt, das eine in einem Metallgehäuse angeordnete Varistorscheibe (Wafer) aufweist, die mit Hilfe einer kolbenförmigen Elektrode gegen den Boden des topfförmigen Gehäuses verspannt ist. Das Gehäuse wird mit einem Deckel verschlossen, der entweder in das topfförmige Gehäuse eingeschraubt wird oder durch einen Federring bzw. einen Clip, der in einer Nut in der Seitenwand des Gehäuses einrastet, befestigt wird. Dabei ist im Deckel eine Öffnung vorgesehen, durch die der Schaft der Elektrode aus dem Gehäuse zum elektrischen Anschluss der Elektrode herausgeführt ist. Der zweite Anschluss zum elektrischen Anschluss des Überspannungsschutzgeräts an die zu schützenden Strom- oder Signalpfade ist dabei am Gehäuse ausgebildet. Zur elektrischen Isolierung der Elektrode gegenüber dem Gehäuse ist ein Isolationsring vorgesehen, der innerhalb des Gehäuses angeordnet ist und ebenfalls eine Öffnung für den Schaft der Elektrode aufweist.

Aus der DE 10 2007 030 653 A1 ist ein Überspannungsschutzgeräte bekannt, welches ebenfalls ein aus zwei Gehäusehalbschalen bestehendes Metallgehäuse aufweist, wobei in dem Gehäuse vorzugsweise zwei zueinander parallel geschaltete Varistoren und eine zwischen den Varistoren angeordnete Mittelelektrode angeordnet sind. Durch eine im Gehäuse angeordnete thermische Abtrennvorrichtung können die beiden Varistoren von der Mittelelektrode weggedrückt werden, wodurch die Varistoren vom Strompfad abgetrennt werden.

Die zuvor beschriebenen, bei den bekannten Überspannungsschutzgeräten vielfach verwendeten, thermischen Abtrennvorrichtungen, die auf dem Aufschmelzen einer Lotverbindung beruhen, haben den Nachteil, dass sie ein relativ träges Ansprechverhalten haben, was dazu führen kann, dass schnell ansteigende Fehlerströme, die aufgrund einer Beschädigung des Überspannungsschutzgeräts über dieses fließen, nicht schnell genug zu einer Auftrennung der Lotverbindung führen. Hat sich die Impedanz eines fehlerhaften Ableiters so stark verändert, dass hohe netzgetriebene Fehlerströme über den Ableiter fließen, so kann der daraus resultierende hohe Leistungsumsatz innerhalb des niederohmig gewordenen Überspannungsschutzgeräts dieses so schnell und so stark erhitzen, dass es zu offenen Lichtbögen kommen kann, bevor die thermische Abtrennvorrichtung das Überspannungsschutzelement abgetrennt hat.

Zur Vermeidung derartiger Fehlerfälle werden in der Praxis separate Vorsicherungen, beispielsweise Schmelzsicherungen, als Kurzschlussstromschutz verwendet, die auf das Ableitvermögen des Überspannungsschutzgeräts abgestimmt sein müssen. Nachteilig ist hierbei jedoch, dass zum einen mit der Vorsicherung ein zusätzliches Bauteil benötigt wird, dass zum anderen derartige, schnell reagierende Vorsicherungen nur eine eingeschränkte Stoßstromtragfähigkeit aufweisen.

Die DE 10 2010 015 814 A1 offenbart ein eingangs beschriebenes Überspannungsschutzgeräts, bei dem in einem zweiteiligen Gehäuse zwei zueinander parallel geschaltete Varistoren und als Bauteil ein den Varistoren in Reihe geschalteter gasgefüllter Überspannungsableiter angeordnet sind. Zusätzlich ist bei einer bevorzugten Ausführung des bekannten Überspannungsschutzgeräts den beiden Varistoren jeweils eine Schmelzsicherung als Vorsicherung zugeordnet. Durch die Integration der Schmelzsicherung in das Gehäuse des Überspannungsschutzgeräts kann auf die Verwendung von zusätzlichen, separaten Vorsicherungen verzichtet werden. Nachteilig ist jedoch auch hierbei, dass die Schmelzsicherungen entsprechend des charakteristischen Schmelzintegrals nur bedingt impulsstromfest sind.

Die EP 1 117 107 A2 offenbart ein Überspannungsschutzgerät gemäß dem Oberbegriff des Patentanspruchs 1, bei dem ein Varistor innerhalb eines zweiteiligen Gehäuses angeordnet ist. Die Stromanschlüsse des Überspannungsschutzgeräts sind jeweils über scheibenförmig ausgebildete Stromübertragungselemente mit einem Anschluss des Varistors im Normalzustand elektrisch leitend verbunden. Hierzu werden die beiden Stromübertragungselemente jeweils durch eine Druckfeder gegen den Varistor gepresst. In dem einen Gehäuseteil ist darüber hinaus eine Schadensanzeigevorrichtung beweglich angeordnet, so dass sie im Schadensfall durch die Druckfeder so weit aus dem Gehäuse herausgeschoben wird, dass ihre außenseitige Signalfläche sichtbar ist.

Damit im Normalzustand des Überspannungsschutzgeräts der Stromanschluss mit dem Varistor elektrisch verbunden ist, ist im Stromanschluss ein Gewindestift eingeschraubt, der über eine Schmelzverbindung mit dem Stromübertragungselement bzw. dem Varistor elektrisch verbunden ist. Dazu ist die punktförmige Schmelzverbindung zentral in einer Öffnung des scheibenförmigen Stromübertragungselements angeordnet. Steigt die Temperatur des Varistors wegen Überlastung und wird dabei die Schmelztemperatur der Schmelzverbindung erreicht, so öffnet die Schmelzverbindung. Dies führt dann dazu, dass die Druckfeder die Schadensanzeigevorrichtung zusammen mit dem Stromanschlusskontakt von dem Varistor wegdrückt, wodurch die elektrische Verbindung zwischen dem Varistor und dem Gewindestift unterbrochen wird.

Wie eingangs bereits ausgeführt worden ist, tritt bei Varistoren aufgrund von Alterung und häufiger Impulsbelastung an ihrem Lebensende eine Reduzierung der Isolationseigenschaften auf, wodurch Verlustleistung im Varistor umgesetzt wird, was zu einer Erwärmung des Varistors führt. Die Temperatur eines Varistors kann dabei so stark ansteigen, dass eine Brandgefahr entsteht. Um eine derart starke Erwärmung der Varistoren zu verhindern, ist bei dem bekannten Überspannungsschutzgerät zusätzlich noch mindestens ein temperaturabhängiger Kurzschlussschalter vorgesehen, wobei durch den oder die Kurzschlussschalter der Varistor bzw. die Varistoren kurzgeschlossen werden. Insgesamt weist das bekannte Überspannungsschutzgerät somit eine Vielzahl von Bauteilen auf, wobei zur Erzielung der beschriebenen Vorteile insbesondere zwei parallel geschaltete Varistoren erforderlich sind.

Der vorliegenden Erfindung liegt daher die Aufgabe zugrunde, ein eingangs beschriebenes Überspannungsschutzelement zur Verfügung zu stellen, dass sowohl robust und langlebig ausgebildet ist als auch möglichst einfach und kostengünstig aufgebaut und montierbar sein soll.

Diese Aufgabe wird bei dem eingangs beschriebenen Überspannungsschutzgerät mit den Merkmalen des Patentanspruchs 1 gelöst. Innerhalb des Gehäuses ist ein Sicherungselement aus metallischem Material angeordnet, wobei das Sicherungselement zylinderförmig ausgebildet ist und zwei Kontaktbereiche und einen die Kontaktbereiche miteinander verbindenden Verbindungsbereich aufweist. Der erste Kontaktbereich des Sicherungselements ist dabei elektrisch leitend mit dem zweiten Anschlussbereich des Varistors und der zweite Kontaktbereich des Sicherungselements im Normalzustand des Überspannungsschutzgeräts elektrisch leitend mit dem Bauteil verbunden. Im Normalzustand erfolgt somit über das Sicherungselement eine elektrisch leitende Verbindung zwischen dem Varistor und dem Bauteil.

Um einen im Fehlerfall über das Überspannungsschutzgerät fließenden Kurzschlussstrom sicher innerhalb des Gehäuses des Überspannungsschutzgeräts unterbrechen zu können, ist bei dem erfindungsgemäßen Überspannungsschutzgerät der Verbindungsbereich des Sicherungselements durch eine gezielte Materialreduzierung als Schmelzsicherung ausgebildet. Die Materialreduzierung erfolgt dabei derart, dass kurze Impulsströme, die aus Überspannungen resultieren, die von dem Überspannungsschutzgerät abgeleitet werden sollen, über den Verbindungsbereich übertragen werden können. Dagegen führen netzfrequente Kurzschlussströme, die in einem Fehlerfall über das Überspannungsschutzgerät und damit auch über den Verbindungsbereich fließende, zu einer Überlastung des Verbindungsbereichs, so dass der Verbindungsbereich schmilzt und damit zerstört wird.

Bei dem erfindungsgemäßen Überspannungsschutzgeräts ist das Sicherungselement zylinderförmig ausgebildet, wobei sich die beiden Kontaktbereiche im Wesentlichen senkrecht zum Verbindungsbereich erstrecken. Die zuvor beschriebene Materialreduzierung des Verbindungsbereichs wird dabei dadurch realisiert, dass der Verbindungsbereich eine Gitterstruktur aufweist, wobei die einzelnen Gitterstreben des Verbindungsbereichs als Strombahnen dienen und zur Gewährleistung der gewünschten Funktion als Schmelzsicherung einen entsprechend geringen Querschnitt aufweisen. Die Ausbildung des Verbindungsbereichs mit einer Gitterstruktur ermöglicht es, den Querschnitt der einzelnen Gitterstreben durch entsprechende Dimensionierung des Querschnitts an die jeweiligen Anforderungen des überwachten und geschützten Strompfades anzupassen.

Dadurch, dass das Sicherungselement zylinderförmig ausgebildet ist, ist es sehr niederinduktiv, wodurch ein niedriger Schutzpegel für das Überspannungsschutzgerät erreichbar ist. Die zylinderförmige Ausbildung des Sicherungselements hat darüber hinaus auch den Vorteil, dass durch einen abzuleitenden Impulsstrom oder Kurzschlussstrom keine die mechanische Konstruktion des Sicherungselements und des Überspannungsschutzgeräts insgesamt beeinträchtigenden oder schädigenden resultierenden dynamischen Stromkräfte auftreten.

Gemäß einer Ausgestaltung des erfindungsgemäßen Überspannungsschutzgeräts ist als Bauteil ein Metallkörper vorgesehen, über den im Normalzustand des Überspannungsschutzgeräts der zweite Anschluss elektrisch leitend mit dem zweiten Kontaktbereich des Sicherungselements verbunden ist. Der Metallkörper ist dabei vorzugsweise als im Wesentlichen zylinderförmiger Hohlkörper ausgebildet.

Gemäß einer bevorzugten Ausgestaltung des erfindungsgemäßen Überspannungsschutzgeräts wird als Bauteil ein zweiter Ableiter verwendet, insbesondere einem gasgefüllten Überspannungsableiter, der mit dem ersten Ableiter in Reihe geschalteten ist. Im Normalzustand des Überspannungsschutzgeräts ist dabei der erste Anschlussbereich des zweiten Ableiters mit dem zweiten Anschluss und der zweite Anschlussbereich des zweiten Ableiters mit dem zweiten Kontaktbereich des Sicherungselements elektrisch leitend verbunden ist. Zwischen den beiden Anschlüssen des Überspannungsschutzgeräts ist somit im Normalzustand des Überspannungsschutzgeräts eine Reihenschaltung aus den beiden Ableitern und dem dazwischen angeordneten Sicherungselement angeordnet.

Durch die zuvor beschriebene Ausbildung des Verbindungsbereichs sowie die Anordnung und Ausgestaltung des Sicherungselements wird ein Überspannungsschutzgerät zur Verfügung gestellt, das auch für hohe Nennspannungen bis zu 1000 V oder mehr geeignet ist und dabei netzfolgestromfrei ausgebildet ist.

Damit das erfindungsgemäße Überspannungsschutzgerät auch für hohe Nennspannungen eingesetzt werden kann, weist es als ersten Ableiter vorzugsweise einen Hochleistungsvaristor in Scheibenform auf. Der zweite Ableiter kann vorzugsweise von einem gasgefüllten Überspannungsableiter gebildet werden. Die Anordnung des zweiten Ableiters zwischen dem einen Anschluss des Überspannungsschutzgeräts und dem Varistor als ersten Ableiter hat den Vorteil, dass zunächst die charakteristische Zündspannung des zweiten Ableiters überschritten werden muss, bevor eine Überspannung an dem Varistor anliegt. Dadurch wird der Varistor nur bei relevanten, die Anlage bzw. den zu schützenden Strompfad gefährdenden Überspannungen belastet, während kleinere Spannungsspitzen, die unterhalb der Zündspannung des zweiten Ableiters liegen, nicht zu einer Belastung des Varistors führen. Dies führt zu einer langsameren Alterung und Schädigung des Varistors, was sich positiv auf die Lebensdauer des Überspannungsschutzgeräts auswirkt. Der als Varistor ausgebildete erste Ableiter dient dabei zum Löschen eines Netzfolgestroms, nachdem der gasgefüllten Überspannungsableiter gezündet hat.

In der Beschreibung wird nachfolgend stets davon ausgegangen, dass als Bauteil ein zweiter Ableiter eingesetzt wird, ohne dass die Erfindung darauf beschränkt sein soll, d.h. als Bauteil kann grundsätzlich auch ein Metallkörper verwendet werden.

Grundsätzlich kann der erste Ableiter bzw. dessen zweiter Anschlussbereich direkt vom Sicherungselement bzw. dessen ersten Kontaktbereich kontaktiert werden. Vorzugsweise ist jedoch ein insbesondere scheibenförmiges Kontaktelement vorgesehen, dessen erste Kontaktfläche mit dem zweiten Anschlussbereich des ersten Ableiters und dessen zweiten Kontaktfläche mit dem ersten Kontaktbereich des Sicherungselements in elektrisch leitendem Kontakt steht. Das den zweiten Ableiter vorzugsweise vollflächig kontaktierende plattenförmige Kontaktelement ist somit zwischen dem ersten Ableiter und dem Sicherungselement angeordnet.

Auch der zweite Ableiter bzw. das Bauteil ist vorzugsweise über ein Kontaktelement mit dem Sicherungselement elektrisch leitend verbunden. Das Kontaktelement steht dazu sowohl mit dem zweiten Anschlussbereich des zweiten Ableiters bzw. des Bauteil als auch mit dem zweiten Kontaktbereich des Sicherungselements in elektrisch leitendem Kontakt. Ist das Bauteil ein Metallkörper, so kann das Kontaktelement vorzugsweise einstückig mit dem Metallkörper ausgebildet sein.

Grundsätzlich könnte der erste Ableiter mit seinem zweiten Anschlussbereich fest, beispielsweise mittels löten oder schweißen, mit dem ersten Kontaktbereich des Sicherungselements oder mit der entsprechenden Kontaktfläche eines Kontaktelements verbunden sein. Um mögliche Dickentoleranzen des verwendeten Ableiters ausgleichen zu können, erfolgt die Kontaktierung des ersten Ableiters jedoch vorzugsweise mittels eines im Gehäuse angeordneten Federelements. Dazu wird der erste Kontaktbereich des Sicherungselements durch die Federkraft des Federelements gegen den zweiten Anschlussbereich des ersten Ableiters gedrückt. Ist zwischen dem ersten Ableiter und dem Sicherungselement ein Kontaktelement angeordnet, so wird der erste Kontaktbereich des Sicherungselements durch das Federelement gegen die zweite Kontaktfläche des auf dem ersten Ableiter aufliegenden Kontaktelements gedrückt.

Um bei Verwendung eines den ersten Ableiter kontaktierenden plattenförmigen Kontaktelements einen Kurzschluss des ersten Ableiters über das metallische Gehäuse zu verhindern, ist ein Isolierelement vorgesehen, auf dem das Kontaktelement aufliegt. Das Isolierelement besteht dabei vorzugsweise aus einem sehr elastischen Material, beispielsweise aus geschäumten Polyurethan oder Silikonschaum, so dass das Isolierelement gleichzeitig auch als Dichtung fungiert. Über das Isolierelement wird dann die zwischen dem Gehäuse und dem Kontaktelement gebildete Kammer für den ersten Ableiter gegen atmosphärische Einflüsse, beispielsweise gegen Luftfeuchtigkeit, abgedichtet.

Da als erster Ableiter ein Varistor verwendet wird, weist das Überspannungsschutzgerät vorzugsweise noch eine im thermischen Überlastfall aktivierte mechanische Abtrennvorrichtung auf. Die mechanische Abtrennvorrichtung weist dabei eine Lotstelle und ein Federelement auf, wobei die Lotstelle derart angeordnet ist, dass der erste Anschlussbereich des zweiten Ableiters entgegen der auf ihn wirkenden Federkraft des Federelements in einer Kontaktposition mit dem zweiten Anschluss gehalten wird, solange die Lotstelle nicht schmilzt. Wird die Lotstelle auf ihre Schmelztemperatur erwärmt, so führt dies zu einem Erweichen der Lotstelle, so dass die Lotstelle die erforderliche Gegenkraft zur Federkraft des Federelements nicht mehr aufbringen kann, was dazu führt, dass der zweite Ableiter durch das Federelement von dem zweiten Anschluss weggedrückt wird, d. h. der elektrisch leitende Kontakt zwischen dem zweiten Anschluss und dem zweiten Ableiter wird aufgetrennt.

Gemäß einer vorteilhaften Ausgestaltung ist die Lotstelle dabei derart angeordnet, dass sie sowohl mit dem ersten Ableiter als auch mit dem zweiten Ableiter in wärmeleitender Verbindung steht, so dass sowohl eine unzulässige Erwärmung des ersten Ableiters als auch eine unzulässige Erwärmung des zweiten Ableiters zu einer entsprechenden Erwärmung der Lotstelle auf ihre Schmelztemperatur führt. Vorzugsweise ist die Lotstelle dabei zwischen dem zweiten Kontaktbereich des Sicherungselements und dem zweiten Ableiter bzw. dem dem zweiten Ableiter zugeordneten Kontaktelement ausgebildet.

In der Praxis sind für spezielle Anwendungen, beispielsweise bei Windenergieanlagen oder Bahnanlagen nicht nur besonders robuste, leistungsfähige Überspannungsschutzgeräte erforderlich, diese sollen auch direkt, d.h. ohne die Verwendung zusätzlicher Anschlussleitungen in das Stromschienensystem integriert werden können. Eine derartige direkte Integration in das Stromschienensystem führt dazu, dass keine zusätzliche Vorsicherung für das Überspannungsschutzgerät eingebaut werden kann. Dieses Problem ist bei dem erfindungsgemäßen Überspannungsschutzgerät durch die Anordnung und Ausbildung des zuvor im Einzelnen beschriebenen Sicherungselements gelöst.

Damit das Überspannungsschutzgerät möglichst einfach direkt in das Stromschienensystem integriert werden kann, wird gemäß einer bevorzugten Ausgestaltung des erfindungsgemäßen Überspannungsschutzgeräts der erste Anschluss des Überspannungsschutzgeräts von am Gehäuse ausgebildeten Befestigungsabschnitten gebildet, über die das Gehäuse mit einer Tragplatte als Stromschiene verbindbar ist. Die Befestigungsabschnitte sind dabei vorzugsweise als Befestigungsflansche ausgebildet, die gleich verteilt an der Unterseite des Gehäuses angeordnet sind, wobei die Befestigungsabschnitte das Gehäuse sowohl radial überragen als auch die Unterseite des Gehäuses überragen. Hierdurch kann das Gehäuse einfach mittels Schrauben an der Tragplatte montiert werden, wobei ein vollflächiger Kontakt der Gehäuseunterseite mit der Tragplatte vermieden wird, so dass kaum Wärme vom Gehäuse in die Tragplatte abgeleitet wird.

Das Gehäuse ist dabei vorzugsweise zweiteilig ausgebildet, wobei das erste Gehäuseteil topfförmig ausgebildet ist und einen die Ableiter aufnehmenden Hohlraum aufweist. Zur elektrischen Verbindung des ersten Ableiters mit den Befestigungsabschnitten des Gehäuses ist es dabei ausreichend, wenn der erste Ableiter mit seinem ersten Anschlussbereich auf dem Gehäuseboden aufliegt. Das zweite Gehäuseteil ist dabei vorzugsweise als Gehäusedeckel ausgebildet, der gegenüber dem ersten Gehäuseteil isoliert ist und mit dem zweiten Anschluss des Überspannungsschutzgeräts verbunden ist. Der zweite Anschluss kann dabei einen Anschlussbolzen aufweisen, an dem auf einfache Art und Weise eine zweite Stromschiene mittels einer Schraube anschließbar ist. Der Gehäusedeckel mit dem integrierten Anschlussbolzen wird vorzugsweise dadurch hergestellt, dass im Fertigungsprozess des Gehäusedeckels der Anschlussbolzen direkt mit Kunststoff umspritzt wird.

Gemäß einer letzten vorteilhaften Ausgestaltung der Erfindung, die hier noch kurz erläutert werden soll, weist das Überspannungsschutzgerät eine optische Zustandsanzeige und vorzugsweise zusätzlich auch eine Fernmeldeeinrichtung zur Fernmeldung des Zustands des Überspannungsschutzgeräts auf. Die optische Zustandsanzeige und die Fernmeldeeinrichtung sind dabei vorzugsweise am Gehäusedeckel angeordnet bzw. im Gehäusedeckel integriert.

Gemäß einer bevorzugten Ausgestaltung der optischen Zustandsanzeige weist diese einen fest angeordneten ersten Teil und einen verschiebbar angeordneten zweiten Teil auf, wobei der zweite Teil durch die Federkraft eines Federelements aus einer ersten Position in eine zweite Position verbracht wird, wenn im thermischen Überlastfall die elektrische Verbindung zwischen dem zweiten Anschluss und dem zweiten Ableiter bzw. dem Metallkörper getrennt wird. Als Federelement dient dabei vorzugsweise das Federelement der mechanischen Abtrennvorrichtung, so dass kein zusätzliches Federelement zur Betätigung der optischen Zustandsanzeige erforderlich ist. Um eine Positionsveränderung des zweiten, verschiebbaren Teils der optischen Zustandsanzeige erkennen zu können, ist in dem Gehäuse ein korrespondierendes Sichtfenster angeordnet. In der ersten Position des zweiten Teils der optischen Zustandsanzeige, in der der Ableiter nicht abgetrennt ist, d.h. im Normalzustand des Überspannungsschutzgeräts, ist der zweite Teil unterhalb des Sichtfensters angeordnet. Dagegen ist im thermischen Überlastfall der verschiebbare zweite Teil der optischen Zustandsanzeige soweit ins Innere des Gehäuses gedrückt worden, dass durch das Sichtfenster der erste Teil der optischen Zustandsanzeige erkennbar ist. Durch eine entsprechende Farbgebung des ersten Teils (rot) und des zweiten Teils (grün) der Zustandsanzeige ist somit auf einfache Art und Weise der Zustand des Überspannungsschutzgeräts von außen erkennbar.

Gemäß einer bevorzugten Ausgestaltung der Fernmeldeeinrichtung weist diese einen Fernmeldeschalter und einen verschiebbar angeordneten, federbelasteten Stößel auf, wobei der Stößel den Fernmeldeschalter betätigt, wenn im thermischen Überlastfall die elektrische Verbindung zwischen dem zweiten Anschluss und dem zweiten Ableiter getrennt ist. Dabei steht vorzugsweise ein Ende des Stößels mit dem verschiebbar angeordneten zweiten Teil der optischen Zustandsanzeige in Kontakt, so dass eine Verschiebung des zweiten Teils der optischen Zustandsanzeige aus seiner ersten Position in seine zweite Position auch ein Verschiebung des Stößels und damit eine Betätigung des Fernmeldekontakts bewirkt.

Im Einzelnen gibt nun eine Vielzahl von Möglichkeiten, das erfindungsgemäße Überspannungsschutzgerät auszugestalten und weiterzubilden. Dazu wird verwiesen sowohl auf die dem Patentanspruch 1 nachgeordneten Patentansprüche als auch auf die nachfolgende Beschreibung eines bevorzugten Ausführungsbeispiels in Verbindung mit der Zeichnung. In der Zeichnung zeigen
- Fig. 1: eine geschnittene perspektivische Darstellung eines bevorzugten Ausführungsbeispiels eines erfindungsgemäßen Überspannungsschutzgeräts, mit nicht ausgelöster Abtrennvorrichtung,
- Fig. 2: eine perspektivische Darstellung des Überspannungsschutzgeräts gemäß Fig. 1, mit ausgelöster Abtrennvorrichtung,
- Fig. 3: eine Schnittdarstellung des Überspannungsschutzgeräts gemäß Fig. 1, mit nicht ausgelöster Abtrennvorrichtung,
- Fig. 4: eine Schnittdarstellung des Überspannungsschutzgeräts gemäß Fig. 3, mit ausgelöster Abtrennvorrichtung,
- Fig. 5: eine vergrößerte Darstellung des im Überspannungsschutzgerät angeordneten Sicherungselements,
- Fig. 6: eine geschnittene perspektivische Darstellung eines zweiten Ausführungsbeispiels eines erfindungsgemäßen Überspannungsschutzgeräts, mit nicht ausgelöster Abtrennvorrichtung, und
- Fig. 7: eine perspektivische Darstellung des Überspannungsschutzgeräts gemäß Fig. 6, mit ausgelöster Abtrennvorrichtung.

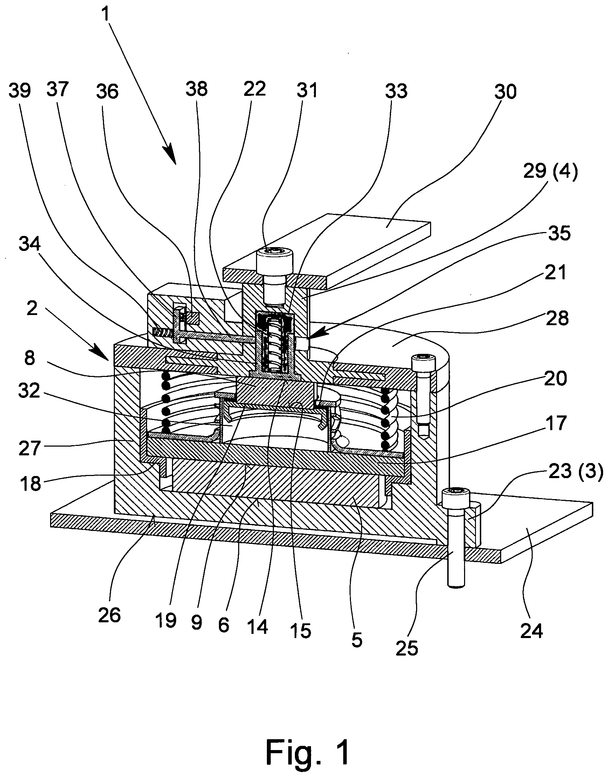

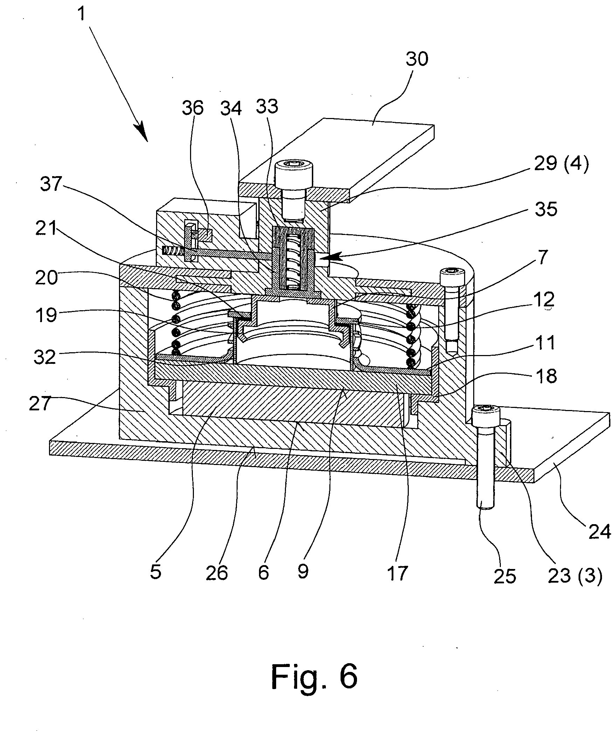

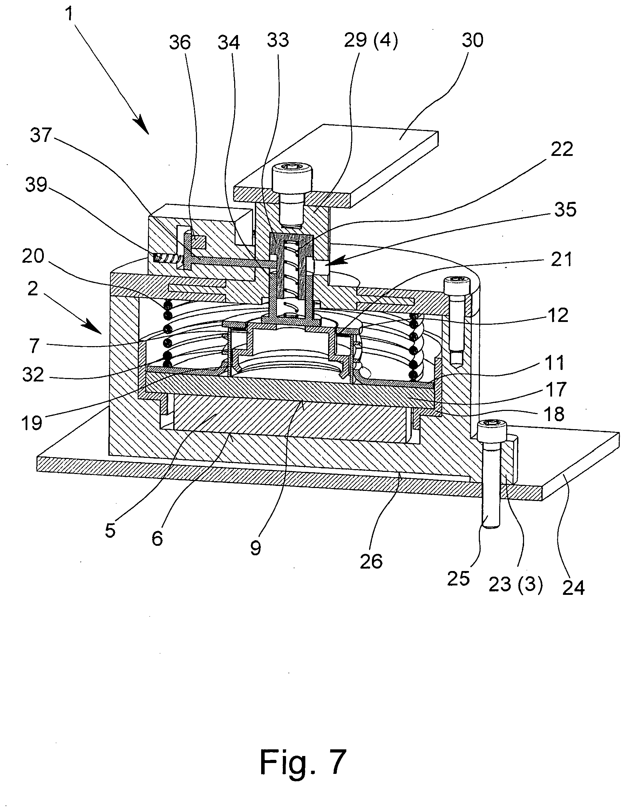

Die Fig. 1 bis 4 zeigen eine bevorzugte Ausführungsform eines ersten Ausführungsbeispiels des erfindungsgemäßen Überspannungsschutzgeräts 1 mit einem im Wesentlichen zylinderförmigen Gehäuse 2 aus Metall, insbesondere aus Aluminium, wobei an dem Gehäuse 2 zwei Anschlüsse 3, 4 zum elektrischen Anschluss des Überspannungsschutzgeräts 1 an den zu schützenden Strompfad ausgebildet sind. Im Inneren des Gehäuses 2 ist ein scheibenförmiger Varistor 5 als erster Ableiter angeordnet. Außerdem ist zwischen den beiden Anschlüssen 3, 4, in Reihe mit dem Varistor 5 ein Bauteil im Gehäuse 2 angeordnet, bei dem es sich bei dem zweiten Ausführungsbeispiel gemäß den Fig. 6 und 7 um einen Metallkörper 7 und bei dem Ausführungsbeispiel gemäß den Fig. 1 bis 4 um einen gasgefüllten Überspannungsableiter 8 handelt.

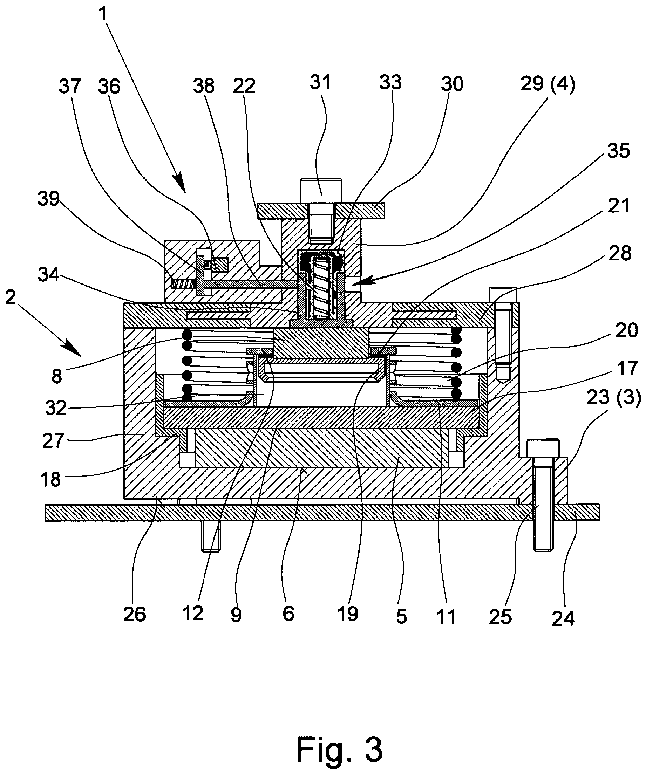

Im in den Fig. 1 und 3 dargestellten Normalzustand des Überspannungsschutzgeräts 1 ist der erste Anschluss 3 elektrisch leitend mit dem ersten Anschlussbereich 6 des Varistors 5 und der zweite Anschluss 4 über den gasgefüllten Überspannungsableiter 8 mit dem zweiten Anschlussbereich 9 des Varistors 5 verbunden. Entsprechend ist bei dem zweiten Ausführungsbeispiel gemäß Fig. 6 der erste Anschluss 3 elektrisch leitend mit dem ersten Anschlussbereich 6 des Varistors 5 und der zweite Anschluss 4 über den Metallkörper 7 elektrisch leitend mit dem zweiten Anschlussbereich 9 des Varistors 5 verbunden.

Die Anordnung des gasgefüllten Überspannungsableiters 8 als zusätzlichen Ableiter neben dem als "eigentlichen" Ableiter für Überspannungen vorgesehenen Varistor 5, hat den Vorteil, dass zunächst die charakteristische Zündspannung des gasgefüllten Überspannungsableiters 8 überschritten werden muss, bevor eine Überspannung an dem Varistor 5 anliegt. Dies führt dazu, dass der Varistor 5 nur bei relevanten, die zu schützende Anlage bzw. den zu schützenden Strompfad gefährdenden Überspannungen belastet wird. Kleinere Spannungsspitzen, die unterhalb der Zündspannung des gasgefüllten Überspannungsableiters 8 liegen, führen nicht zu einer Belastung des Varistors 5, was zu einer langsameren Alterung und Schädigung des Varistors 5 führt.

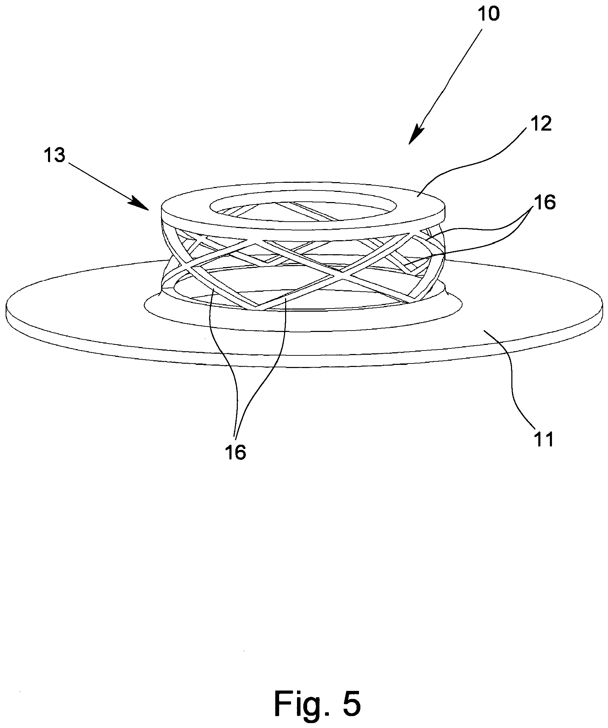

Die elektrische Verbindung zwischen dem ersten Ableiter 5 und dem zweiten Ableiter 8 erfolgt bei dem erfindungsgemäßen Überspannungsschutzgerät 1 durch ein besonders ausgebildetes Sicherungselement 10, das im Detail in Fig. 5 dargestellt ist. Das Sicherungselement 10, das aus einem metallischen Material besteht, wobei das Material jedoch keine besonders hohe Leitfähigkeit aufweisen muss, weist zwei Kontaktbereiche 11, 12 und einen die Kontaktbereiche 11, 12 miteinander verbindenden Verbindungsbereich 13 auf. Der erste Kontaktbereich 11 des Sicherungselements 10 ist dabei elektrisch leitend mit dem zweiten Anschlussbereich 9 des Varistors 5 verbunden. Außerdem ist im Normalzustand des Überspannungsschutzgeräts 1, wie aus den Fig. 1 und 3 ersichtlich ist, der zweite Anschluss 4 mit dem ersten Anschlussbereich 14 des gasgefüllten Überspannungsableiters 6 und der zweite Anschlussbereich 15 des gasgefüllten Überspannungsableiters 6 mit dem zweiten Kontaktbereich 12 des Sicherungselements 10 elektrisch leitend verbunden ist.

Aus Fig. 5 ist ersichtlich, dass das Sicherungselement 10 näherungsweise zylinderförmig ausgebildet ist, wobei sich die beiden Kontaktflächen 11, 12 im Wesentlichen senkrecht zum Verbindungsbereich 13 erstrecken. Der Verbindungsbereich 13 weist dabei eine Gitterstruktur auf, wobei die einzelnen Gitterstreben 16 des Verbindungsbereichs 13 als Strombahnen für einen über das Überspannungsschutzgerät 1 fließenden Strom dienen. Dadurch, dass der Verbindungsbereich 13 eine Gitterstruktur aufweist, wobei die einzelnen Gitterstreben 16 einen nur geringen Querschnitt aufweisen, ist das zur Stromübertragung zur Verfügung stehende Material des Verbindungsbereichs 13 stark reduziert, so dass der Verbindungsbereich 13 als Schmelzsicherung wirkt.

Die Anordnung der Gitterstreben 16 sowie deren Querschnitt ist dabei so gewählt, dass kurze Impuls- oder Stoßströme, die aus Überspannungen resultieren, die von dem Überspannungsschutzgerät 1 abgeleitet werden sollen, über den Verbindungsbereich 13 und damit auch über das Sicherungselement 10 übertragen werden können. Wenn jedoch aufgrund einer Beschädigung des Überspannungsschutzgeräts 1, insbesondere des Varistors 5 oder des gasgefüllten Überspannungsableiters 8 ein netzfrequenter Kurzschlussstrom über das Sicherungselement 10 fließt, so führt dies dazu, dass die als Strombahnen dienenden Gitterstreben 16 durch den fließenden Kurzschlussstrom überlastet werden und daher innerhalb kurzer Zeit schmelzen, so dass die elektrische Verbindung und damit auch der Kurzschlussstrom unterbrochen wird. Eventuell dabei auftretende Lichtbögen können durch im Inneren des Gehäuses 2 angeordnete geeignete Löschmittel, beispielsweise durch Sand, gelöscht werden, wodurch die gewollte Unterbrechung des Kurzschlussstroms unterstützt wird.

Wie aus den Fig. 1 und 3 ersichtlich ist, ist das Sicherungselement 10 bzw. dessen Kontaktbereiche 11, 12 nicht direkt mit den beiden Ableitern 5, 8 verbunden. Auf den zweiten Anschlussbereich 9 des Varistors 5 ist ein scheibenförmiges Kontaktelement 17 angeordnet, das in seinem Randbereich auf einem Isolierelement 18 aufliegt, wodurch das Kontaktelement 17 vom Gehäuse 2 isoliert ist, um einen Kurzschluss des Varistors 5 zu vermeiden. Das ringförmig ausgebildete Isolierelement 18 besteht aus einem sehr elastischen Material, insbesondere einem geschäumten Material, beispielsweise Polyurethan-Schaum oder Silikonschaum, so dass das Isolierelement 18 auch als Dichtung fungiert. Damit dichtet das Isolierelement 18 die von dem Gehäuse 2 und dem Kontaktelement 17 gebildete Varistorkammer gegen atmosphärische Einflüsse, beispielsweise Luftfeuchtigkeit, ab. Auch zur Kontaktierung des gasgefüllten Überspannungsableiters 8 ist ein Kontaktelement 19 vorgesehen, das mit dem zweiten Anschlussbereich 15 des gasgefüllten Überspannungsableiters 8 fest verbunden, insbesondere verlötet oder verschweißt ist. Im Normalzustand des Überspannungsschutzgeräts 1 ist somit das dem Varistor 5 zugeordnete Kontaktelement 17 über das Sicherungselement 10 mit dem dem gasgefüllten Überspannungsableiter 8 zugeordneten Kontaktelement 19 elektrisch leitend verbunden.

Zur Gewährleistung eines möglichst guten elektrischen Übergangs zwischen dem Varistor 5 und dem Kontaktelement 17 sowie dem Kontaktelement 17 und dem Sicherungselement 10 ist ein Federelement 20 vorgesehen, durch das der erste Kontaktbereich 11 des Sicherungselements 10 gegen die dem Kontaktbereich 11 gegenüberliegende Kontaktfläche des Kontaktelements 17 und damit auch das Kontaktelement 17 gegen den Varistor 5 gedrückt wird. Zur Erzielung einer möglichst großen Kontaktfläche ist die auf dem Kontaktbereich 11 aufliegende Windung des Federelements 20 abgeflacht. Eventuell auftretende Dickentoleranzen des verwendeten Varistors 5 können bei dem dargestellten Aufbau des Überspannungsschutzgeräts 1 innerhalb bestimmter Grenzen durch die Elastizität des Isolierelements 18 und durch das Federelement 20 ausgeglichen werden, ohne dass sich die Federkraft, mit dem der Kontaktbereich 11 des Sicherungselements 10 gegen das Kontaktelement 17 gedrückt wird, merklich ändert.

Neben der durch das Sicherungselement 10 realisierten Unterbrechung eines unerwünschten Kurzschlussstromes über das Überspannungsschutzgerät 1 ist in dem Überspannungsschutzgerät 1 noch eine mechanische Abtrennvorrichtung vorgesehen, die im thermischen Überlastfall auslöst und einen Stromfluss durch das Überspannungsschutzgerät 1 unterbricht. Die mechanische Abtrennvorrichtung weist dabei eine Lotstelle 21 als thermisch sensitives Element und ein Federelement 22 auf, wobei der gasgefüllte Überspannungsableiter 8 durch das Federelement 22 mit einer Federkraft beaufschlagt wird, die vom zweiten Anschluss 4 weggerichtet ist. Trotz der Federkraft des Federelements 22 verbleibt der erste Anschlussbereich 14 des gasgefüllten Überspannungsableiters 8 in der Kontaktposition mit dem zweiten Anschluss 4, solange die Lotstelle 21 nicht oberhalb ihrer Schmelztemperatur erwärmt wird.

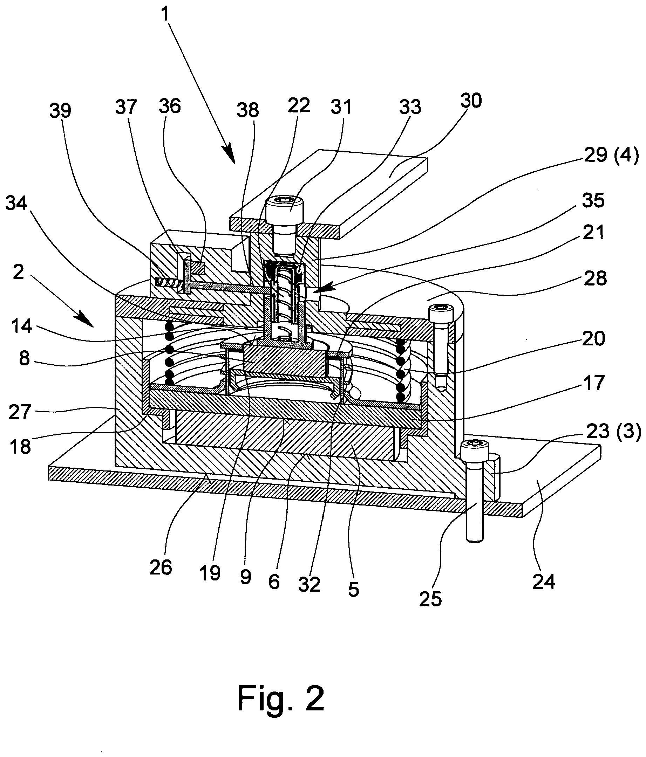

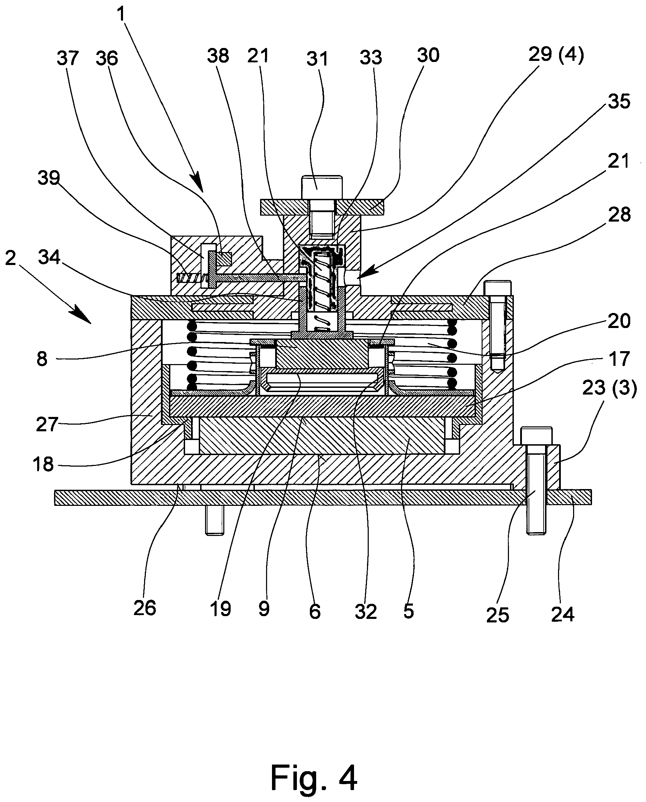

Wie aus den Fig. 1 und 3 ersichtlich ist, ist die Lotstelle 21 dabei zwischen dem zweiten Kontaktbereich 12 des Sicherungselements 10 und dem am gasgefüllten Überspannungsableiter 8 befestigten Kontaktelement 19 ausgebildet. Dadurch steht die Lotstelle 21 über das Sicherungselement 10 und das Kontaktelement 17 sowohl mit dem Varistor 5 als auch über das Kontaktelement 19 mit dem gasgefüllten Überspannungsableiter 8 in wärmeleitender Verbindung. Eine unzulässige Erwärmung sowohl des Varistors 5 als auch des gasgefüllten Überspannungsableiters 8 führt dadurch zu einer Erwärmung der Lotstelle 21, so dass die Lotstelle 21 bei Erreichen ihrer Schmelztemperatur schmilzt und damit nicht mehr die Gegenkraft zur Federkraft des Federelements 22 aufbringen kann. Dies führt dann dazu - wie in den Fig. 2 und 4 ersichtlich ist - dass der gasgefüllte Überspannungsableiter 8 durch die Federkraft des Federelements 22 ins Gehäuseinnere gedrückt wird, so dass der erste Anschlussbereich 14 des gasgefüllten Überspannungsableiters 8 nicht mehr den zweiten Anschluss 4 des Überspannungsschutzgeräts 1 kontaktiert. Der Strompfad zwischen den beiden Anschlüssen 3, 4 ist dadurch unterbrochen.

Bei dem Ausführungsbeispiel des Überspannungsschutzgerät 1 gemäß den Fig. 6 und 7 ist anstelle des zweiten Ableiters ein Metallkörper 7 innerhalb des Gehäuses 2 angeordnet, wobei im Normalzustand des Überspannungsschutzgeräts 1 der zweite Anschluss 4 über den Metallkörper 7 elektrisch leitend mit dem zweiten Kontaktbereich 12 des Sicherungselements 10 verbunden ist. Der Metallkörper 7 ist dabei als zylindrischer Hohlkörper ausgebildet, wobei auf der dem zweiten Anschluss 4 abgewandten Seite ein Kontaktelement 19 bzw. ein Kontaktabschnitt ausgebildet ist, das einstückig mit dem Metallkörper 7 ausgebildet ist.

Das Kontaktelement 19 steht im Normalzustand des Überspannungsschutzgerät 1 mit dem zweiten Kontaktbereich 12 des Sicherungselements 10 über die Lotstelle 21 in elektrisch leitendem Kontakt. Kommt es zu einer Erwärmung der Lotstelle 21, so dass die Lotstelle 21 schmilzt und damit nicht mehr die Gegenkraft zur Federkraft des Federelements 22 aufbringen kann, so führt dies bei dem Ausführungsbeispiel gemäß den Fig. 6 und 7 dazu, dass der Metallkörper 7 durch die Federkraft des Federelements 22 ins Gehäuseinnere gedrückt wird, so dass der Metallkörper 7 nicht mehr den zweiten Anschluss 4 des Überspannungsschutzgeräts 1 kontaktiert (vgl. Fig. 7). Der Strompfad zwischen den beiden Anschlüssen 3, 4 ist dann ebenfalls unterbrochen.

Bei dem in den Figuren dargestellten erfindungsgemäßen Überspannungsschutzgerät 1 ist das Gehäuse 2 sehr robust ausgebildet, was insbesondere dadurch erreicht wird, dass das Gehäuse 2 zylindrisch ausgebildet ist und aus Metall besteht. Außerdem ist das Überspannungsschutzgerät 1 durch die Ausbildung des Gehäuses 2 besonders einfach, insbesondere ohne zusätzliche Anschlussleitungen, in den zu überwachenden Strompfad integrierbar. Wie aus den Figuren ersichtlich ist, liegt der Ableiter 5 mit seinem ersten Anschlussbereich 6 vollflächig auf dem Gehäuseboden auf. Zur elektrischen Verbindung des Ableiters 5 weist das Gehäuse 2 drei Befestigungsabschnitte 23 auf, die den ersten Anschluss 3 des Überspannungsschutzgeräts 1 bilden und über die das Gehäuse 2 mit einer Tragplatte 24 als Stromschiene verbindbar ist. Die als Flansche ausgebildeten Befestigungsabschnitte 23 sind dabei in einem Winkel von 120° zueinander angeordnet und weisen jeweils ein Loch auf, so dass das Gehäuse 2 mit entsprechenden Befestigungsschrauben 25 auf der Tragplatte 24 montiert werden kann. Da die Befestigungsabschnitte 23 die Unterseite 26 des Gehäuses 2 überragen, besteht kein vollflächiger Kontakt zwischen der Gehäuseunterseite 26 und der Tragplatte 24, so dass kaum Wärme von dem Gehäuse 2 in die Tragplatte 24 abgeleitet wird.

Bei dem dargestellten Überspannungsschutzgerät 1 ist das Gehäuse 2 zweiteilig ausgebildet, wobei das erste Gehäuseteil 27 topfförmig ausgebildet ist, wobei insbesondere der Varistor 5 und der Metallkörper 7 bzw. der gasgefüllte Überspannungsableiter 8 sowie das Sicherungselement 10 und die Kontaktelemente 17, 19 im Hohlraum des Gehäuseteils 27 angeordnet sind. Das zweite Gehäuseteil ist als Gehäusedeckel 28 ausgebildet, der gegenüber dem ersten Gehäuseteil 27 isoliert ist. Der Gehäusedeckel 28 weist einen Anschlussbolzen 29 als zweiten Anschluss 4 des Überspannungsschutzgeräts 1 auf, wobei der Anschlussbolzen 29 im Fertigungsprozess direkt mit Kunststoff umspritzt werden kann, so dass eine nachträgliche Montage des Anschlussbolzens 29 an dem Gehäusedeckel 28 entfällt. Durch die Ausbildung des Anschlussbolzens 29 kann auf einfache Art und Weise eine zweite Stromschiene 30 mittels einer Schraube 31 an dem Gehäuse 2 befestigt werden, so dass das Überspannungsschutzgerät 1 ohne zusätzliche Anschlussleitungen an die Stromschienen 24, 30 angeschlossen und damit in ein zu überwachendes Stromschienensystem integriert werden kann.

Um eine mechanische Beschädigung des Verbindungsbereichs 13 des Sicherungselements 10 durch die Federkraft des auf den gasgefüllten Überspannungsableiter 8 wirkenden Federelements 22 bei bestehender Lotverbindung zu verhindern, ist ein elastisches Stützelement 32 innerhalb des Sicherungselements 10 angeordnet. Das Stützelement 32 wird dabei von dem Verbindungsbereich 13 umgeben und stützt sich einerseits am zweiten Kontaktbereich 12 des Sicherungselements 10 und andererseits an der zweiten Kontaktfläche des Kontaktelements 17 ab. Durch das Stützelement 32 wird eine Übertragung der Federkraft der Feder 22 über die Lotstelle 21 auf den zweiten Kontaktbereich 12 des Sicherungselements 10 verhindert. Eine gewünschte Federwirkung des Stützelements 32 kann dabei durch eine entsprechende Materialwahl oder beispielsweise durch eine Wabenstruktur des Stützelements 32 erreicht werden, wobei das Stützelement 32 steifer als der Verbindungsbereich 13 des Sicherungselements 10 sein muss.

Schließlich weist das Gehäuse 2 des Überspannungsschutzgeräts 1 noch eine optische Zustandsanzeige auf, die aus einem fest angeordneten ersten Teil 33 und einem verschiebbar angeordneten zweiten Teil 34 besteht. Außerdem weist der Gehäusedeckel 28 noch ein Sichtfenster 35 auf, durch das je nach Zustand des Überspannungsschutzgeräts 1 entweder der erste, rote Teil 33 oder der zweite, grüne Teil 34 der optischen Zustandsanzeige sichtbar ist. Zur Verschiebung des zweiten Teils 34 aus seiner ersten Position (Fig. 1, 3 und 6) in seine zweite Position (Fig. 2, 4 und 7) wird die Federkraft des Federelements 22 genutzt.

Wie aus einem Vergleich der Fig. 1 und 2, der Fig. 3 und 4 oder der Fig. 6 und 7 ersichtlich ist, befindet sich dann, wenn aufgrund einer unzulässigen Erwärmung die Temperatur der Lotstelle 21 deren Schmelztemperatur erreicht hat und dadurch der gasgefüllte Überspannungsableiter 8 durch das Federelement 22 ins Innere des Gehäuses 2 gedrückt wird, der zweite Teil 34 der optischen Zustandsanzeige in seiner zweiten, unteren Position, so dass durch das Sichtfenster 35 der erste Teil 33 der optischen Zustandsanzeige erkennbar ist. Im Normalzustand des Überspannungsschutzgeräts 1 ist dagegen der zweite Teil 34 unterhalb des Sichtfensters 35 angeordnet. Durch eine entsprechende Farbwahl - erster Teil 33 rot und zweiter Teil 34 grün - ist somit durch das Sichtfenster 35 auf einfache Art und Weise erkennbar, ob die mechanische Abtrennvorrichtung ausgelöst hat oder nicht.

Neben der zuvor beschriebenen optischen Zustandsanzeige weist das Überspannungsschutzgerät 1 auch noch eine Fernmeldeeinrichtung zur Fernmeldung des Zustands des Überspannungsschutzgeräts 1 auf. Die Fernmeldeeinrichtung ist insgesamt am Gehäusedeckel 28 angeordnet und weist einen Fernmeldeschalter 36, einen verschiebbar angeordneten Stößel 37 und eine den Stößel 37 mit einer Federkraft beaufschlagende Feder 39 auf. Im Normalzustand des Überspannungsschutzgeräts 1 (Fig. 1, 3 und 6) ist der Fernmeldeschalter 36 nicht betätigt, da der Betätigungsabschnitt des Stößels 37 einen geringen Abstand zum Fernmeldeschalter 36 bzw. zu dessen Betätiger aufweist. Dabei wird der Stößel 37 dadurch entgegen der Federkraft der Feder 39 in dieser ersten Position gehalten, dass sich das Ende 38 des Stößels 37 am zweiten Teil 34 der optischen Zustandsanzeige abstützt. Wenn sich dagegen der zweite, verschiebbar angeordnete Teil 34 der optischen Zustandsanzeige nach unten in seine zweite Position bewegt hat, wird auch der Stößel 37 durch die Feder 39 in seine zweite Position verschoben, in der der Stößel 37 den Fernmeldeschalter 36 betätigt. Der federbelastete Stößel 37 detektiert somit die Position des beweglichen zweiten Teils 34 der optischen Zustandsanzeige, so dass eine aufgrund des Auslösens der thermisch aktivierten mechanischen Abtrennvorrichtung erfolgte Veränderung der optischen Zustandsanzeige über die Fernmeldeeinrichtung auch an einem entfernten Ort, beispielsweise einem Kontrollraum, angezeigt werden kann.

## Patentansprüche

1. Überspannungsschutzgerät mit einem Gehäuse (2), mit zwei Anschlüssen (3, 4) zum elektrischen Anschluss des Überspannungsschutzgeräts (1) an den zu schützenden Strompfad und mit mindestens einem im Inneren des Gehäuses (2) angeordneten ersten Ableiter, der als Varistor (5) ausgebildet ist,
wobei im Normalzustand des Überspannungsschutzgeräts (1) der erste Anschluss (3) elektrisch leitend mit dem ersten Anschlussbereich (6) des Varistors (5) und der zweite Anschluss (4) über mindestens ein Bauteil (7, 8) mit dem zweiten Anschlussbereich (9) des Varistors (5) verbunden ist,
wobei innerhalb des Gehäuses (2) ein Sicherungselement (10) aus metallischem Material angeordnet ist, wobei das Sicherungselement (10) zylinderförmig ausgebildet ist und zwei Kontaktbereiche (11, 12) und einen die Kontaktbereiche (11, 12) miteinander verbindenden Verbindungsbereich (13) aufweist, so dass der erste Kontaktbereich (11) des Sicherungselements (10) elektrisch leitend mit dem zweiten Anschlussbereich (9) des Varistors (5) und der zweite Kontaktbereich (12) des Sicherungselements (10) im Normalzustand des Überspannungsschutzgeräts (1) elektrisch leitend mit dem Bauteil (7, 8) verbunden ist,
dass der Verbindungsbereich (13) durch Materialreduzierung derart als Schmelzsicherung ausgebildet ist, dass kurze Impulsströme, die aus von dem Überspannungsschutzgerät (1) abzuleitenden Überspannungen resultieren, über den Verbindungsbereich (13) übertragen werden können, während in einem Fehlerfall über das Überspannungsschutzgerät (1) fließende netzfrequente Kurzschlussströme den Verbindungsbereich (13) überlasten, so dass der Verbindungsbereich (13) zerstört wird, und dass sich die beiden Kontaktbereiche (11, 12) im Wesentlichen senkrecht zum Verbindungsbereich (13) erstrecken , **dadurch gekennzeichnet, dass** der Verbindungsbereich (13) eine Gitterstruktur aufweist, wobei die einzelnen Gitterstreben (16) des Verbindungsbereichs (13) als Strombahnen dienen und einen geringen Querschnitt aufweisen.

2. Überspannungsschutzgerät nach Anspruch 1, **dadurch gekennzeichnet, dass** das Bauteil ein Metallkörper (7) ist, über den im Normalzustand des Überspannungsschutzgeräts (1) der zweite Anschluss (4) elektrisch leitend mit dem zweiten Kontaktbereich (12) des Sicherungselements (10) verbunden ist.

3. Überspannungsschutzgerät nach Anspruch 1, **dadurch gekennzeichnet, dass** das Bauteil ein zweiter Ableiter ist, insbesondere ein gasgefüllter Überspannungsableiter (8), der mit dem Varistor (5) in Reihe geschalteten ist, wobei im Normalzustand des Überspannungsschutzgeräts (1) der erste Anschlussbereich (14) des zweiten Ableiters mit dem zweiten Anschluss (4) und der zweite Anschlussbereich (15) des zweiten Ableiters mit dem zweiten Kontaktbereich (12) des Sicherungselements (10) elektrisch leitend verbunden ist.

4. Überspannungsschutzgerät nach einem der Ansprüche 1 bis 3, **dadurch gekennzeichnet, dass** ein Kontaktelement (17) vorgesehen ist, dessen erste Kontaktfläche mit dem zweiten Anschlussbereich (9) des Varistors (5) und dessen zweite Kontaktfläche mit dem ersten Kontaktbereich (11) des Sicherungselements (10) in elektrisch leitenden Kontakt steht.

5. Überspannungsschutzgerät nach Anspruch 4, **dadurch gekennzeichnet, dass** ein Isolierelement (18) innerhalb des Gehäuses (2) angeordnet ist, auf dem das Kontaktelement (17) aufliegt, so dass das Kontaktelement (17) vom Gehäuse (2) isoliert ist, wobei das Isolierelement (18) vorzugsweise aus einem sehr elastischen Material besteht, beispielsweise aus einem geschäumten Material, so dass das Isolierelement (18) auch als Dichtung fungiert.

6. Überspannungsschutzgerät nach einem der Ansprüche 1 bis 5, **dadurch gekennzeichnet, dass** ein Kontaktelement (19) vorgesehen ist, das sowohl mit dem Bauteil (7, 8) als auch mit dem zweiten Kontaktbereich (12) des Sicherungselements (10) in elektrisch leitendem Kontakt steht.

7. Überspannungsschutzgerät nach Anspruch 4 und 6, **dadurch gekennzeichnet, dass** das Sicherungselement (10) im Normalzustand des Überspannungsschutzgeräts (1) das dem Varistor (5) zugeordnete Kontaktelement (17) mit dem dem Bauteil (7, 8) zugeordneten Kontaktelement (19) elektrisch leitend verbindet.

8. Überspannungsschutzgerät nach einem der Ansprüche 1 bis 7, **dadurch gekennzeichnet, dass** ein Federelement (20) derart innerhalb des Gehäuses (2) angeordnet ist, dass der erste Kontaktbereich (11) des Sicherungselements (10) durch die Federkraft des Federelements (20) gegen den zweiten Anschlussbereich (9) des Varistors (5) gedrückt wird.

9. Überspannungsschutzgerät nach Anspruch 4, 5 oder 7, **dadurch gekennzeichnet, dass** ein Federelement (20) derart innerhalb des Gehäuses (2) angeordnet ist, dass der erste Kontaktbereich (11) des Sicherungselements (10) durch die Federkraft des Federelements (20) gegen die zweite Kontaktfläche des dem ersten Ableiter (5) zugeordneten Kontaktelements (17) gedrückt wird.

10. Überspannungsschutzgerät nach einem der Ansprüche 1 bis 9, **dadurch gekennzeichnet, dass** eine im thermischen Überlastfall aktivierte mechanischen Abtrennvorrichtung vorgesehen ist, die im thermischen Überlastfall die elektrische Verbindung zwischen dem zweiten Anschluss (4) und dem Bauteil, insbesondere dem zweiten Ableiter (8) trennt, und dass die mechanische Abtrennvorrichtung eine Lotstelle (21) und ein Federelement (22) aufweist, wobei das Bauteil (7, 8), insbesondere der erste Anschlussbereich (14) des zweiten Ableiters (8), entgegen der Federkraft des Federelements (22) in der Kontaktposition mit dem zweiten Anschluss (4) verbleibt, solange die Lotstelle (21) nicht schmilzt.

11. Überspannungsschutzgerät nach Anspruch 6 oder 7 und nach Anspruch 10, **dadurch gekennzeichnet, dass** die Lotstelle (21) sowohl mit dem Varistor (5) als auch mit dem Bauteil (7, 8) in wärmeleitender Verbindung steht, wobei die Lotstelle (21) vorzugsweise zwischen dem zweiten Kontaktbereich (12) des Sicherungselements (10) und dem zweiten Ableiter (8) oder dem dem zweiten Ableiter (8) zugeordneten Kontaktelement (19) angeordnet ist.

12. Überspannungsschutzgerät nach einem der Ansprüche 1 bis 11, **dadurch gekennzeichnet, dass** der erste Anschlussbereich (6) des Varistors (5) auf dem Gehäuseboden aufliegt und der erste Anschluss (3) von am Gehäuse (2) ausgebildeten Befestigungsabschnitten (23) gebildet wird, über die das Gehäuse (2) mit einer Tragplatte (24) als Stromschiene verbindbar ist, wobei die Befestigungsabschnitte (23) vorzugsweise die Unterseite (26) des Gehäuses (2) überragen.

13. Überspannungsschutzgerät nach einem der Ansprüche 1 bis 12, **dadurch gekennzeichnet, dass** das Gehäuse (2) zweiteilig ausgebildet ist, wobei das erste Gehäuseteil (27) topfförmig ausgebildet ist und einen den ersten Ableiter (5) und das Bauteil (7, 8) aufnehmenden Hohlraum aufweist und das zweite Gehäuseteil als Gehäusedeckel (28) ausgebildet ist, der gegenüber dem ersten Gehäuseteil (27) isoliert ist und mit dem zweiten Anschluss (4) verbunden ist.

14. Überspannungsschutzgerät nach einem der Ansprüche 4, 5, 7 oder 9, **dadurch gekennzeichnet, dass** ein elastisches Stützelement (32) derart innerhalb des Gehäuses (2) angeordnet ist, dass das Stützelement (32) von dem Verbindungsbereich (13) des Sicherungselements (10) umgeben ist, wobei sich das Stützelement (32) einerseits am zweiten Kontaktbereich (12) des Sicherungselements (10) und andererseits am zweiten Anschlussbereich (9) des Varistors (5) oder an der zweiten Kontaktfläche des dem ersten Ableiter (5) zugeordneten Kontaktelements (17) abstützt.

15. Überspannungsschutzgerät nach einem der Ansprüche 1 bis 14, **dadurch gekennzeichnet, dass** eine optische Zustandsanzeige und/oder eine Fernmeldeeinrichtung zur Fernmeldung des Zustandes des Überspannungsschutzgeräts (1) am Gehäuse (2) ausgebildet oder angeordnet ist, wobei die Fernmeldeeinrichtung vorzugsweise einen Fernmeldeschalter (36) und einen verschiebbar angeordneten, federbelasteten Stößel (37) aufweist, wobei der Stößel (37) den Fernmeldeschalter (36) betätigt, wenn im thermischen Überlastfall die elektrische Verbindung zwischen dem zweiten Anschluss (4) und dem Bauteil (7, 8) getrennt wird.

## Claims

1. Overvoltage protection device with a housing (2), with two terminals (3, 4) for electrical connection of the overvoltage protection device (1) to the current path which is to be protected and with at least one arrester designed as a varistor (5), which is located within the housing (2), wherein, in the normal state of the overvoltage protection device (1), the first terminal (3) is connected in an electrically conductive manner to the first connecting region (6) of the varistor (5) and the second terminal (4) is connected to the second connecting region (9) of the varistor (5) via at least one component (7, 8),
wherein, within the housing (2) there is a fusible element (10) of metallic material, wherein the fusible element (10) is cylindrical and has two contact regions (11, 12) and a connecting region (13) which connects the contact regions (11, 12) to one another,
wherein the first contact region (11) of the fusible element (10) is connected in an electrically conductive manner to the second connecting region (9) of the varistor (5) and the second contact region (12) of the fusible element (10) in the normal state of the overvoltage protection device (1) is connected in an electrically conductive manner to the component (7, 8),
so that the connecting region (13) is formed by material reduction as a fusible link such that short pulsed currents which result from overvoltages which are to be discharged from the overvoltage protection device (1) can be transmitted via the connecting region (13), while, in case of a fault, line-frequency short circuit currents which are flowing via the overvoltage protection device (1) overload the connecting region (13) so that the connecting region (13) is destroyed, and
that the two contact regions (11, 12) extend essentially perpendicular to the connecting region (13)
**characterized in**
**that** the connecting region (13) has a lattice structure, wherein the individual lattice braces (16) of the connecting region (13) are used as current paths and have a small cross section.

2. Overvoltage protection device according to claim 1, **characterized in that** the component is a metal body (7) via which in the normal state of the overvoltage protection device (1) the second terminal (4) is connected in an electrically conductive manner to the second contact region (12) of the fusible element (10).

3. Overvoltage protection device according to claim 1, **characterized in that** the component is a second arrester, especially a gas-filled surge arrester (8) which is connected in series to the varistor (5), wherein, in the normal state of the overvoltage protection device (1), the first connecting region (14) of the second arrester is connected in an electrically conductive manner to the second terminal (4) and the second connecting region (15) of the second arrester is connected in an electrically conductive manner to the second contact region (12) of the fusible element (10).

4. Overvoltage protection device according to any one of claims 1 to 3, **characterized in that** there is a contact element (17) whose first contact surface is in electrically conductive contact with the second connecting region (9) of the varistor (5) and whose second contact surface is in electrically conductive contact with the first contact region (11) of the fusible element (10).

5. Overvoltage protection device according to claim 4, **characterized in that** there is an insulating element (18) within the housing (2) on which the contact element (17) rests so that the contact element (17) is insulated from the housing (2), wherein the insulating element (18) consists preferably of a very elastic material, for example of foamed material so that the insulating element (18) also acts as a seal.

6. Overvoltage protection device according to any one of claims 1 to 5, **characterized in that** there is a contact element (19) which is in electrically conductive contact both with the component (7, 8) and also with the second contact region (12) of the fusible element (10).

7. Overvoltage protection device according to claims 4 and 6, **characterized in that** the fusible element (10) in the normal state of the overvoltage protection device (1) connects in an electrically conductive manner the contact element (17) which is assigned to the first arrester (5) to the contact element (19) which is assigned to the component (7, 8).

8. Overvoltage protection device according to any one of claims 1 to 7, **characterized in that** a spring element (20) is located within the housing (2) such that the first contact region (11) of the fusible element (10) is pressed against the second connecting region (9) of the varistor (5) by the spring force of the spring element (20).

9. Overvoltage protection device according to claim 4, 5 or 7, **characterized in that** a spring element (20) is located within the housing such that the first contact region (11) of the fusible element (10) is pressed against the second contact surface of the contact element (17) which is assigned to the first arrester (5) by the spring force of the spring element (20).

10. Overvoltage protection device according to any one of claims 1 to 9, **characterized in that** there is a mechanical disconnector which is activated in the case of a thermal overload and which in the case of a thermal overload breaks the electrical connection between the second terminal (4) and the component, especially the second arrester (8), and that the mechanical disconnector has one solder site (21) and one spring element (22), wherein the component (7, 8), especially the first connecting region (14) of the second arrester (8) remains against the spring force of the spring element (22) in the contact position with the second terminal (4) as long as the solder site (21) does not melt.

11. Overvoltage protection device according to claim 6 or 7 and 10, **characterized in that** the solder site (21) is connected in a thermally conductive manner to the varistor (5) and also to the component (7, 8), wherein the solder site (21) is located preferably between the second contact region (12) of the fusible element (10) and the second arrester (8) or the contact element (19) which is assigned to the second arrester (8).

12. Overvoltage protection device according to any one of claims 1 to 11, **characterized in that** the first connecting region (6) of the varistor (5) rests on the bottom of the housing and the first terminal (3) is formed by fastening sections (23) which are made on the housing (2) and via which the housing (2) can be connected to a support plate (24) as a busbar, wherein the fastening sections (23) preferably project beyond the bottom (26) of the housing (2).

13. Overvoltage protection device according to any one of claims 1 to 12, **characterized in that** the housing (2) is made in two parts, wherein the first housing part (27) is made pot-shaped and has a cavity which accommodates the first arrester (5) and the component (7, 8) and the second housing part is made as a housing cover (28) which is insulated relative to the first housing part (27) and is connected to the second terminal (4).

14. Overvoltage protection device according to claim 4, 5, 7 or 9, **characterized in that** there is an elastic support element (32) within the housing (2) such that the support element (32) is surrounded by the connecting region (13) of the fusible element (10), wherein the support element (32) is supported on the one hand on the second contact region (12) of the fusible element (10) and on the other hand on the second connecting region (9) of the varistor (5) or on the second contact surface of the contact element (17) which is assigned to the first arrester (5).

15. Overvoltage protection device according to any one of claims 1 to 14, **characterized in that** an optical status display and/or a remote indication apparatus for remote indication of the state of the overvoltage protection device (1) is located or made on the housing (2), wherein the remote indication apparatus preferably has a remote indication switch (36) and a movable, springloaded plunger (37), wherein the plunger (37) activates the remote indication switch (36) if, in the case of a thermal overload, the electrical connection between the second terminal (4) and the component (7, 8) is broken.

## Revendications

1. Appareil de protection contre les surtensions, comprenant un boîtier (2), deux bornes (3, 4) servant à la connexion électrique de l'appareil de protection contre les surtensions (1) au trajet de courant à protéger, et au moins un premier parafoudre disposé à l'intérieur du boîtier (2) et réalisé sous forme de varistance (5),
dans lequel, à l'état normal de l'appareil de protection contre les surtensions (1), la première borne (3) est reliée de manière électriquement conductrice à la première zone de connexion (6) de la varistance (5), et la deuxième borne (4) est reliée de manière électriquement conductrice à la deuxième zone de connexion (9) de la varistance (5) par l'intermédiaire d'au moins un composant (7, 8),
un élément fusible (10) d'un matériau métallique étant disposé à l'intérieur du boîtier (2), l'élément fusible (10) étant réalisé en forme de cylindre et présentant deux zones de contact (11, 12) et une zone de liaison (13) reliant les zones de contact (11, 12) l'une à l'autre de sorte
que la première zone de contact (11) de l'élément fusible (10) est reliée de manière électriquement conductrice à la deuxième zone de connexion (9) de la varistance (5) et la deuxième zone de contact (12) de l'élément fusible (10) est reliée de manière électriquement conductrice au composant (7, 8) à l'état normal de l'appareil de protection contre les surtensions (1),
que la zone de liaison (13) est réalisée par réduction de matière sous forme de fusible de telle sorte que des courants pulsés brefs, qui résultent de surtensions à éliminer de l'appareil de protection contre les surtensions (1), peuvent être transférés par l'intermédiaire de la zone de liaison (13), alors que des courants de court-circuit à la fréquence du secteur passant par l'appareil de protection contre les surtensions (1) en cas de panne surchargent la zone de liaison (13) de sorte que la zone de liaison (13) est détruite, et
que les deux zones de contact (11, 12) s'étendent de manière substantiellement perpendiculaire à la zone de liaison (13),
**caractérisé en ce**
**que** la zone de liaison (13) présente une structure de grille, les barreaux de grille (16) individuels de la zone de liaison (13) servant de voies de courant et présentant une section transversale réduite.

2. Appareil de protection contre les surtensions selon la revendication 1, **caractérisé en ce que** le composant est un corps métallique (7) par lequel, à l'état normal de l'appareil de protection contre les surtensions (1), la deuxième borne (4) est reliée de manière électriquement conductrice à la deuxième zone de contact (12) de l'élément fusible (10).

3. Appareil de protection contre les surtensions selon la revendication 1, **caractérisé en ce que** le composant est un deuxième parafoudre, en particulier un parasurtenseur à gaz (8) qui est connecté en série avec la varistance (5), dans lequel, à l'état normal de l'appareil de protection contre les surtensions (1), la première zone de connexion (14) du deuxième parafoudre est reliée de manière électriquement conductrice à la deuxième borne (4), et la deuxième zone de connexion (15) du deuxième parafoudre est reliée de manière électriquement conductrice à la deuxième zone de contact (12) de l'élément fusible (10).

4. Appareil de protection contre les surtensions selon l'une quelconque des revendications 1 à 3, **caractérisé en ce qu'**un élément de contact (17) est prévu dont la première surface de contact est en contact électriquement conducteur avec la deuxième zone de connexion (9) de la varistance (5) et dont la deuxième surface de contact est en contact électriquement conducteur avec la première zone de contact (11) de l'élément fusible (10).

5. Appareil de protection contre les surtensions selon la revendication 4, **caractérisé en ce qu'**un élément isolant (18) est disposé à l'intérieur du boîtier (2) sur lequel repose l'élément de contact (17) de sorte que l'élément de contact (17) est isolé par rapport au boîtier (2), l'élément isolant (18) étant de préférence composé d'un matériau très élastique, par exemple d'un matériau expansé, de sorte que l'élément isolant (18) sert également de joint d'étanchéité.

6. Appareil de protection contre les surtensions selon l'une quelconque des revendications 1 à 5, **caractérisé en ce qu'**un élément de contact (19) est prévu qui est en contact électriquement conducteur à la fois avec le composant (7, 8) et avec la deuxième zone de contact (12) de l'élément fusible (10).

7. Appareil de protection contre les surtensions selon les revendications 4 et 6, **caractérisé en ce que** l'élément fusible (10), à l'état normal de l'appareil de protection contre les surtensions (1), relie de manière électriquement conductrice l'élément de contact (17) associé à la varistance (5) à l'élément de contact (19) associé au composant (7, 8).

8. Appareil de protection contre les surtensions selon l'une quelconque des revendications 1 à 7, **caractérisé en ce qu'**un élément faisant ressort (20) est disposé à l'intérieur du boîtier (2) de telle sorte que la première zone de contact (11) de l'élément fusible (10) est poussée par la force de ressort de l'élément faisant ressort (20) contre la deuxième zone de connexion (9) de la varistance (5).

9. Appareil de protection contre les surtensions selon la revendication 4, 5 ou 7, **caractérisé en ce qu'**un élément faisant ressort (20) est disposé à l'intérieur du boîtier (2) de telle sorte que la première zone de contact (11) de l'élément fusible (10) est poussée par la force de ressort de l'élément faisant ressort (20) contre la deuxième surface de contact de l'élément de contact (17) associé au premier parafoudre (5).

10. Appareil de protection contre les surtensions selon l'une quelconque des revendications 1 à 9, **caractérisé en ce qu'**un dispositif de coupure mécanique, activé en cas de surcharge thermique, est prévu qui coupe la liaison électrique entre la deuxième borne (4) et le composant, en particulier le deuxième parafoudre (8), en cas de surcharge thermique, et **en ce que** le dispositif de coupure mécanique présente un point de soudure (21) et un élément faisant ressort (22), le composant (7, 8), en particulier la première zone de connexion (14) du deuxième parafoudre (8), restant dans la position de contact avec la deuxième borne (4) contre la force de ressort de l'élément faisant ressort (22) tant que le point de soudure (21) ne fond pas.

11. Appareil de protection contre les surtensions selon la revendication 6 ou 7 et selon la revendication 10, **caractérisé en ce que** le point de soudure (21) est en liaison thermiquement conductrice à la fois avec la varistance (5) et avec le composant (7, 8), le point de soudure (21) étant de préférence disposé entre la deuxième zone de contact (12) de l'élément fusible (10) et le deuxième parafoudre (8) ou l'élément de contact (19) associé au deuxième parafoudre (8).

12. Appareil de protection contre les surtensions selon l'une quelconque des revendications 1 à 11, **caractérisé en ce que** la première zone de connexion (6) de la varistance (5) repose sur le fond de boîtier, et la première borne (3) est formée par des sections de fixation (23) réalisées sur le boîtier (2) qui permettent de relier le boîtier (2) à une plaque de base (24) sous forme de barre conductrice, les sections de fixation (23) dépassant de préférence de la face inférieure (26) du boîtier (2).

13. Appareil de protection contre les surtensions selon l'une quelconque des revendications 1 à 12, **caractérisé en ce que** le boîtier (2) est réalisé en deux parties, la première partie de boîtier (27) étant réalisée en forme de cuvette et présentant une cavité recevant le premier parafoudre (5) et le composant (7, 8), et la deuxième partie de boîtier étant réalisée sous forme de couvercle de boîtier (28) qui est isolé par rapport à la première partie de boîtier (27) et est relié à la deuxième borne (4).

14. Appareil de protection contre les surtensions selon l'une quelconque des revendications 4, 5, 7 ou 9, **caractérisé en ce qu'**un élément d'appui élastique (32) est disposé à l'intérieur du boîtier (2) de telle sorte que l'élément d'appui (32) est entouré de la zone de liaison (13) de l'élément fusible (10), l'élément d'appui (32) prenant appui d'une part sur la deuxième zone de contact (12) de l'élément fusible (10) et d'autre part sur la deuxième zone de connexion (9) de la varistance (5) ou sur la deuxième surface de contact de l'élément de contact (17) associé au premier parafoudre (5).

15. Appareil de protection contre les surtensions selon l'une quelconque des revendications 1 à 14, **caractérisé en ce qu'**un indicateur d'état optique et/ou un dispositif de télécommunication servant à communiquer à distance l'état de l'appareil de protection contre les surtensions (1) est réalisé ou disposé sur le boîtier (2), le dispositif de télécommunication présentant de préférence un commutateur de télécommunication (36) et un poussoir (37) à ressort, disposé de manière coulissante, le poussoir (37) actionnant le commutateur de télécommunication (36) si la liaison électrique entre la deuxième borne (4) et le composant (7, 8) est coupée en cas de surcharge thermique.
